# EUROPÄISCHE PATENTSCHRIFT

(11) **EP 2 678 525 B1**
(45) Veröffentlichungstag und Bekanntmachung des Hinweises auf die Patenterteilung: **08.04.2015**
(21) Anmeldenummer: 12712897.3
(22) Anmeldetag: 23.02.2012
(51) Int. Cl.: E21C 29/14, F16G 13/12

(54) **HOBELVORRICHTUNG**
PLANING DEVICE
DISPOSITIF RABOTEUR

(30) Priorität: 25.02.2011 DE 202011000248 U
(43) Veröffentlichungstag der Anmeldung: 01.01.2014
(73) Patentinhaber: Thiele GmbH & Co. KG, 58640 Iserlohn (DE)
(72) Erfinder: SCHERF, Burkhard, Hermann, 59192 Bergkamen (DE); PHILIPP, Günther, 58239 Schwerte (DE); VORWERK, Dirk, 58097 Hagen (DE)
(74) Vertreter: Griepenstroh, Jörg
(86) Internationale Anmeldenummer: PCT/DE2012/000166
(87) Internationale Veröffentlichungsnummer: WO 2012/113380

(56) Entgegenhaltungen:
- DE-T2- 60 211 133
- DE-U1-202004 014 092
- DE-U1-202005 013 132

## Beschreibung

Die Erfindung betrifft eine Hobelvorrichtung mit einer Hobelkette gemäß den Merkmalen im Oberbegriff von Schutzanspruch 1.

Kohlenhobel werden im Untertagebetrieb zur schälenden Gewinnung von Kohle eingesetzt. Der Antrieb erfolgt über ein Zugglied in Form einer Hobelkette, welche den Kohlenhobel im Streb parallel zur Kohlenfront eines Flözes zwischen zwei Strecken hin und her bewegt. Das hereingewonnene Haufwerk sowie die Kohle werden über einen Kettenkratzförderer abtransportiert. Die Kettenkratzförderer sind gleichzeitig Führung, Fahrbahn und Widerlager für den Kohlenhobel. Die Hobelkette selbst wird hierbei in entsprechenden Kanälen der Hobelkettenführung geführt sowie gelagert.

Die Hobelkette erfährt im Einsatz eine starke Beanspruchung. Neben einer starken Zug- und Stoßbelastung kommt eine hohe Reibung hinzu. Diese entsteht überwiegend innerhalb der Kanäle und in Umlenkbereichen. Dem sich daraus ergebenden hohen Verschleiß der einzelnen Kettenglieder und der die Hobelkette verbindende Kettenschlösser wird mit unterschiedlichen Querschnitten der Kettenglieder begegnet.

Die EP 1 495 239 B1 beschreibt einen innerhalb von Kanälen geführten Hobelkettenstrang mit einem Kettenschlossglied. Die vor dem Kettenschlossglied gelegenen Kettenglieder sind hierbei als Kettensonderglieder ausgebildet und weisen an ihren parallel zur Längsrichtung des Hobelkettenstrangs verlaufenden Kettenschenkeln verdickte Bereiche auf, um das Kettenschlossglied zu schützen. Hierdurch wird das Kettenschlossglied vor vorzeitigem Verschleiß geschützt.

DE 20 2004 014 092 U1 offenbart eine Kette für eine Hobelvorrichtung, wobei die Kettenglieder mit einer Breite gleich oder größer als die Breite des Kettenschlosses ausgebildet sind.

DE 602 11 133 T2 offenbart eine Kette zum Tragen von Lasten oder zum Betrieben von Maschinen, wobei zumindest manche der Kettenglieder zumindest über eine Teile seiner Oberfläche einen nicht-kreisförmigen Querschnitt aufweisen.

Vor dem Hintergrund immer höher werdender zu übertragender Leistungen und Geschwindigkeiten bietet auch diese Bauform, bezogen auf sämtliche Kettenglieder einer Hobelkette, Potential für Verbesserungen. Insbesondere die durch den Kontakt von Kettengliedern und Kanälen entstehende Reibung führt neben entsprechenden Reibverlusten zu einer schnellen lokalen Aufheizung der Randschicht der einzelnen Kettenglieder über die Austenitisierungstemperatur des Werkstoffs hinaus. Der Erwärmung folgt bei Stillstand oder Freilauf eine ebenso schnelle Abkühlung, durch die sich Reibmartensit bilden kann. So kann neben dem Reibverschleiß der Hobelkette eine zusätzliche, die Belastbarkeit der einzelnen Kettenglieder schwächende Rissbildung auftreten.

Die Risse führen zu Spannungsspitzen und zu einem vorzeitigen Versagen und damit zu einem teuren Stillstand der gesamten Hobelvorrichtung.

Der Erfindung liegt somit die Aufgabe zugrunde, eine Hobelvorrichtung mit einer als Gliederkette ausgebildeten Hobelkette dahingehend zu verbessern, dass die Standzeit der Hobelkette verlängert und die Nutzungsdauer erhöht wird.

Die Lösung dieser Aufgabe besteht nach der Erfindung in einer Hobelvorrichtung mit einer als Gliederkette ausgebildeten und innerhalb eines Kanals geführten Hobelkette gemäß den Merkmalen von Schutzanspruch 1.

Die so geschaffene Hobelvorrichtung wird mit einer Hobelkette betrieben, wobei die einzelnen Kettenglieder jeweils Kettenbögen und diese verbindende Kettenschenkel aufweisen. Bei der Hobelkette handelt es sich um eine Gliederkette. Die Hobelkette wird in einem Kanal einer Hobelkettenführung geführt, welcher einen im Wesentlichen an die Abmessungen der Hobelkette angepassten Innenradius aufweist.

Die Kettenschenkel weisen im Querschnitt jeweils einen sich über eine Sehnenlänge erstreckenden Außenradius auf. Erfindungsgemäß weisen der Innenradius des Kanals und der Außenradius der Kettenschenkel ein Verhältnis von 1 : 0,8 bis 1 : 1,2 zueinander auf.

Der besondere Vorteil liegt in einer möglichst großen Auflagerfläche zwischen dem Außenradius der Kettenschenkel und dem Innenradius des Kanals. Die während des Betriebs auftretenden Reibkräfte werden hierdurch auf eine große Fläche übertragen, wodurch sich die Spannung und der damit einhergehende Verschleiß der Kettenschenkel minimieren.

Vorteilhafte Ausgestaltungen des Erfindungsgedankens sind Gegenstand der abhängigen Ansprüche 2 bis 13.

Hiernach ist in einer Variante vorgesehen, dass der Innenradius des Kanals und der Außenradius der Kettenschenkel ein Verhältnis von 1 : 1,0 bis 1 : 1,2 zueinander aufweisen.

Eine Dicke der Kettenschenkel und die Sehnenlänge des Außenradius weisen ein Verhältnis von 1 : 0,5 bis 1 : 1,15 zueinander auf. Bevorzugt weisen die Dicke der Kettenschenkel und die Sehnenlänge ein Verhältnis von 1 : 1,0 bis 1 : 1,15 zueinander auf. In Kombination mit einem Verhältnis des Innenradius des Kanals und des Außenradius der Kettenschenkel von über 1 : 1 wird eine 2-Linien-Berührung zwischen dem Kettenschenkel und der Innenfläche des Kanals erreicht.

Durch die zumindest in der Anfangsphase der Nutzung der Hobelkette vorhandene 2-Linien-Berührung wird die durch Reibung erzeugte Hitze reduziert sowie besser abgeleitet. In der Folge wird die mögliche Bildung einer Martensitschicht verzögert oder gar verhindert. Hierdurch erhöht sich die Standzeit der einzelnen Kettenglieder und somit der Hobelkette insgesamt.

Der Außenradius der Kettenschenkel erstreckt sich mit seiner Sehnenlänge über einen Umfangsbereich der Kettenschenkel von 50° bis 100°, insbesondere von 53° bis 98°. Die Größe der durch den Außenradius und dessen Sehnenlänge gebildeten Segment-Fläche zwischen Kettenschenkel und Innenfläche des Kanals wird hierdurch an die entsprechenden Anforderungen angepasst.

Die sich innerhalb der einzelnen Kettenglieder gegenüberliegenden Innenseiten der Kettenschenkel weisen einen parallelen Verlauf zueinander auf. Die hierdurch zumindest abschnittsweise gleichbleibende innere Breite der einzelnen Kettenglieder innerhalb der Teilung bewirkt, dass die einzelnen über die Kettenbögen ineinandergreifenden Kettenglieder in Längsrichtung ungehindert ineinander geschoben werden können.

Grundsätzlich können die sich gegenüberliegenden Innenseiten der Kettenschenkel auch einen nicht parallelen Verlauf aufweisen, so dass der jeweilige Kettenbogen innerhalb der Teilung eines benachbarten Kettengliedes beispielsweise durch eine Verjüngung der inneren Breite in seiner Bewegungsfreiheit klar definiert ist. So können die sich gegenüberliegenden Innenseiten der Kettenschenkel so ausgestaltet sein, dass der Kettenbogen eines benachbarten Kettengliedes eine nur geringe Bewegungsfreiheit innerhalb der Teilung des anschließenden Kettengliedes erfährt.

Auch den Innenseiten der Kettenschenkel gegenüberliegende Außenseiten der Kettenschenkel weisen einen parallelen Verlauf zueinander auf. Hierdurch wird eine möglichst große Auflagerfläche zwischen der Innenseite des Kanals und den Kettenschenkeln ermöglicht.

Die sich jeweils zwischen den Kettenbögen erstreckenden Kettenschenkel der einzelnen Kettenglieder weisen dabei eine gleichbleibende Querschnittsform auf. Grundsätzlich können die einzelnen Kettenschenkel auch eine den jeweiligen Anforderungen entsprechende Querschnittsform aufweisen, wobei sich die Querschnittsform der gegenüberliegenden Kettenschenkel beispielsweise voneinander unterscheidet. Weiterhin kann sich die jeweilige Querschnittsform des Kettenschenkels auch über den Verlauf des Kettenschenkels hinweg verändern. Auch die Kettenbögen der einzelnen Kettenglieder weisen jeweils einen gleichbleibenden Kreisquerschnitt mit zu den Kettenschenkeln hin angeordneten Übergangsabschnitten auf. Die Übergangsabschnitte führen den jeweiligen Querschnitt des Kettenschenkels und Kettenbogens ineinander. Hierdurch wird insbesondere der Außenumfang des Kettenglieds von den Kettenschenkeln zu den Kettenbögen hin angeglichen.

Zwischen dem Außenradius und einem dem gegenüberliegenden Innenradius der einzelnen Kettenschenkel ist jeweils ein Übergangsbereich angeordnet. Der Übergangsbereich weist im Querschnitt der Kettenschenkel einen bogenförmigen, beispielsweise S-förmig oder doppel-S-förmig gebogenen Verlauf auf. Hierdurch wird die jeweilige Kontur des Außenradius über seine jeweilige Breite sowie dessen Umfangsbereich hinaus an den Innenradius der Kettenschenkel angeglichen. Durch diese Anordnung erfolgt kein abrupter und somit scharfkantiger Radienwechsel, so dass die beiden unterschiedlichen Radien des Innenradius und des Außenradius über Rundungen und/oder bogenförmige Verläufe vermittelt werden. Insbesondere die Rundungen wirken einen möglichen Kerbeffekt des Materials in diesem Bereich vor.

Die sich berührenden und aneinander reibenden Bereiche weisen eine möglichst große Kontaktfläche zueinander auf, wodurch gleich zu Nutzungsbeginn im Gegensatz zu herkömmlichen Rundstahlketten ein günstigeres Reibverhalten zwischen den Kettenschenkeln und dem Führungsrohr erreicht wird. Die Flächenpressung wird hierdurch reduziert.

Die Hobelvorrichtung sieht vor, dass eine sich jeweils in Querrichtung der Kettenglieder erstreckende äußere Breite der Kettenglieder und der Innenradius des Kanals ein Verhältnis zwischen 1 : 0,5 und 1 : 0,6 zueinander aufweisen. Somit liegt der innere Durchmesser des Kanals grundsätzlich über der äußeren Breite der Kettenglieder, um ein mögliches Klemmen wirksam zu verhindern. Je nach Anforderung kann somit das Spiel zwischen der Innenwandung des Kanals und den äußeren Abmessungen der mit dem Kanal in Kontakt stehenden Bereiche der Kettenglieder gewählt werden.

In vorteilhafter Weise weist der Kanal einen Kreisquerschnitt auf. Der Kanal kann hierbei sowohl in Quer- als auch in Längsrichtung Öffnungen aufweisen. In vorteilhafter Weise ist die Wandung des Kanals in sich geschlossen, so dass keine unnötigen Kanten entstehen, welche einen vorzeitigen Verschleiß der Hobelkette begünstigen. Der innere Kreisquerschnitt des Kanals bietet, bezogen auf seinen Innenradius, dem einzelnen Kettenglied einen immer gleichbleibenden Abstand zu dessen Wandung, so dass dieses gleichbleibend geführt sowie gelagert wird.

Die Erfindung sieht vor, dass die sich gegenüberliegenden Kettenschenkel eines Kettengliedes über einen sich zwischen diesen erstreckenden Steg miteinander verbunden sein können. Der Steg kann nachträglich zumindest bereichsweise mit den Kettenschenkeln verbunden sein. In vorteilhafter Weise ist die Verbindung zwischen Steg und Kettenschenkeln stoffschlüssig, beispielsweise über eine Schweißung erfolgt. Weiterhin kann der Steg auch einstückig mit den Kettenschenkeln der Kettenglieder verbunden sein.

Der Steg kann in seinem Querschnitt eine eckige oder runde Form aufweisen. Bevorzugt ist der Steg in seinem Querschnitt rund oder oval ausgebildet, um in einem möglichen Kontaktbereich mit den Kettenbögen und/oder Kettenschenkeln der miteinander verbundenen Kettenglieder eine möglichst klemmfreie Bewegung der Kettenglieder untereinander zu ermöglichen.

Weiterhin kann der Steg in Bezug auf seinen Querschnitt zu den Kettenschenkeln hin verdickt und dabei mittig zwischen den Schenkeln verjüngt sein. Die Verdickung sowie Verjüngung kann sich dabei auf den gesamten Querschnitt oder nur auf die sich zwischen den Kettenschenkeln und Kettenbögen erstreckende Dicke des Steges beziehen.

Durch den Steg werden die einzelnen Kettenglieder, insbesondere deren Kettenschenkel, stabilisiert. Weiterhin ist das Ineinanderschieben ineinander verhakter Kettenglieder dahingehend begrenzt, dass der jeweilige Kettenbogen bei seiner Manipulation innerhalb der Teilung des benachbarten Kettengliedes gegen den Steg stößt.

Die erfindungsgemäße Hobelvorrichtung umfasst eine Gliederkette in Form einer Hobelkette, welche durch die Abstimmung des Außenradius der Kettenschenkel gegenüber dem Innenradius des Kanals eine deutlich höhere Standzeit sowie Nutzungsdauer mit sich bringt. Insbesondere die Ausgestaltung der Kettenschenkel kann gegenüber der Innenfläche des Kanals eine 2-Linien-Berührung aufweisen, wodurch die vorzeitige Bildung einer Martensitschicht reduziert wird. Insgesamt ergibt sich eine einfach zu fertigende, leichte und ohne nennenswerte Querschnittssprünge auskommende Hobelkette, die gegenüber den sonst üblichen Ausführungen einen längeren und damit wirtschaftlicheren Einsatz gewährleistet.

Die vorliegende Erfindung ist nachfolgend anhand einiger schematisch dargestellter Ausführungsbeispiele näher beschrieben. Es zeigen:
- Figur 1: einen Abschnitt einer erfindungsgemäßen Hobelvorrichtung in perspektivischer Darstellungsweise;
- Figur 2: einen Querschnitt durch die erfindungsgemäße Hobelvorrichtung aus Figur 1;
- Figur 3: einen Abschnitt einer Hobelkette in einer Ansicht;
- Figur 4: ein einzelnes Kettenglied einer Hobelkette in einer Aufsicht;
- Figur 5: einen ersten Querschnitt durch ein Kettenglied;
- Figur 6: eine Variante eines Kettenglieds gemäß der Darstellungsweise von Figur 5;
- Figur 7: eine weitere Variante eines Kettenglieds gemäß den Darstellungsweisen von Figur 5 und 6;
- Figur 8: eine in den Übergangsbereichen der einzelnen Radien geänderte Variante eines Kettenglieds gemäß den Darstellungsweisen der Figuren 5, 6 und 7 sowie
- Figur 9: eine Variante des Kettengliedes der Figur 4 in selber Darstellungsweise.

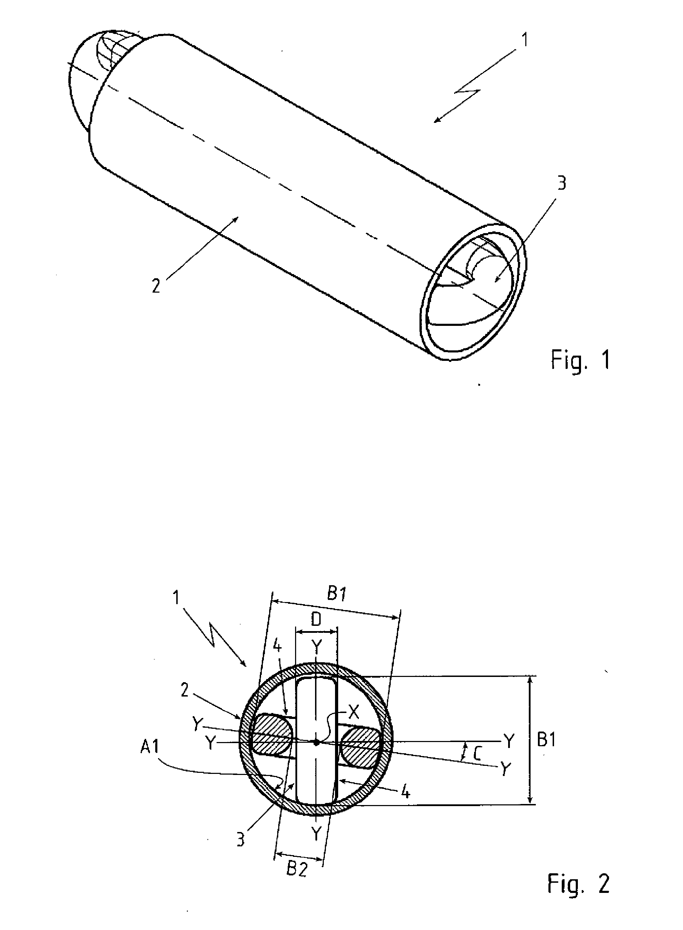

Figur 1 zeigt einen Teilausschnitt einer erfindungsgemäßen Hobelvorrichtung 1. Die Hobelvorrichtung 1 umfasst einen Kanal 2 einer nicht näher dargestellten Hobelkettenführung, in welchem eine Hobelkette 3 geführt und gelagert ist.

Figur 2 verdeutlicht die Führung der Hobelkette 3 innerhalb des Kanals 2 in einer Schnittdarstellung durch die Hobelvorrichtung 1 aus Figur 1. Der Kanal 2 weist einen kreisrunden Querschnitt auf. Die Hobelkette 3 ist innerhalb des Kanals 2 mit Spiel zu dessen inneren Wandung mit einem Innenradius A1 geführt. Das Spiel liegt in einem Bereich, welcher sich aus dem Verhältnis von äußerer Breite B1 des Kettenglieds 4 und dem Innenradius A1 des Kanals 2 zwischen 1 : 0,5 und 1 : 0,6 ergibt. In der Darstellung ist erkennbar, dass sich die Hobelkette 3 aus im Kanal 2 hintereinander angeordneten und ineinandergreifenden Kettengliedern 4 zusammensetzt. Die einzelnen Kettenglieder 4 weisen in Richtung ihrer jeweiligen Querachsen Y und somit in Querrichtung eine identische äußere Breite B1 und eine Dicke D auf. Die Hobelkette 3 teilt sich dabei in horizontale und vertikale Kettenglieder 4 auf, welche zur Sicherstellung der Verklankungsfreiheit ein Spiel untereinander aufweisen. Das Spiel zwischen den einzelnen Kettengliedern 4 ergibt sich aus der Differenz der Dicke D und einer diese umgreifende innere Breite B2 der Kettenglieder 4. Durch das Spiel sind die zusammenhängenden Kettenglieder 4 mit ihren jeweiligen Querachsen Y um einen Winkel C von maximal 8° um eine Längsachse des Kettenglieds 4 gegeneinander verdrehbar.

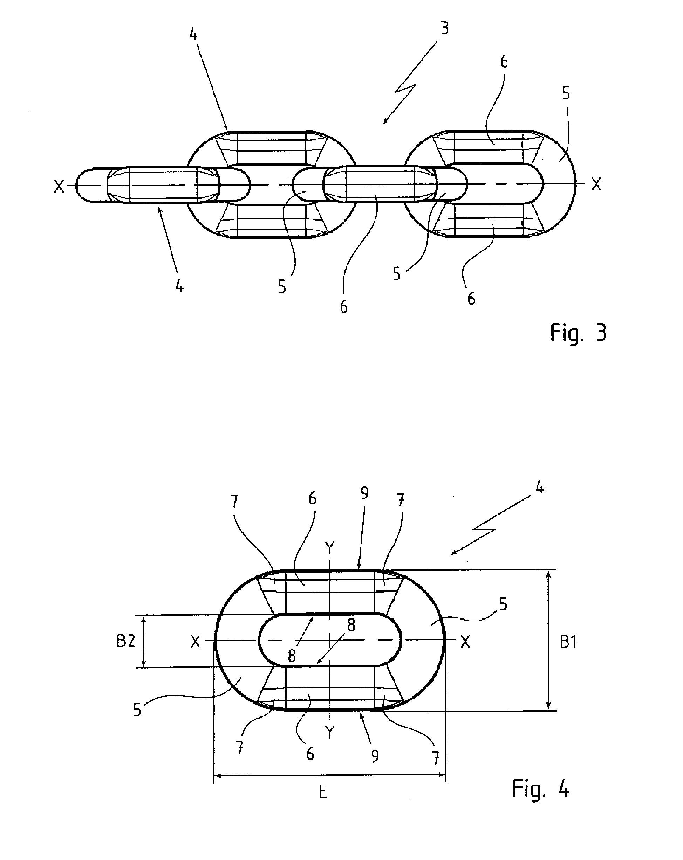

Figur 3 zeigt die Hobelkette 3 aus den Figuren 1 und 2 in einer Seitenansicht außerhalb des Kanals 2 aus den Figuren 1 und 2. In dieser Ansicht wird nochmals verdeutlicht, dass sich die Hobelkette 3 in Richtung der Längsachse X aus einer Reihe der einzelnen, beweglich ineinandergefügten Kettengliedern 4 zusammensetzt. Jedes einzelne Kettenglied 4 setzt sich aus zwei Kettenbögen 5 und zwei Kettenschenkeln 6 zusammen. Dabei umgreifen sich die einzelnen Kettenglieder 4 mit ihren jeweiligen Kettenbögen 5. Die Kettenbögen 5 jedes einzelnen Kettenglieds 4 sind jeweils über die geradlinig verlaufenden Kettenschenkel 6 miteinander verbunden.

Figur 4 verdeutlicht den Aufbau eines einzelnen Kettenglieds 4 der Hobelkette 3 aus Figur 3 in seiner Aufsicht. Das Kettenglied 4 weist eine ovale Form mit einer sich in Richtung seiner Längsachse X erstreckenden äußeren Länge E auf. Die äußere Länge E erstreckt sich zwischen den äußeren Rundungen der sich gegenüberliegenden Kettenbögen 5. Die Kettenbögen 5 und die diese verbindenden Kettenschenkeln 6 gehen jeweils durch diese verbindende Übergangsabschnitte 7 ineinander über. Die Übergangsabschnitte 7 gleichen dabei die jeweilige Querschnittsform der Kettenbögen 5 und der Kettenschenkel 6 einander an. Die sich innerhalb des Kettenglieds 4 gegenüberliegende Innenseiten 8 der beiden Kettenschenkel 6 verlaufen parallel zueinander. Auch die den Innenseiten 8 gegenüberliegende Außenseiten 9 der Kettenschenkel 6 weisen zwischen den Übergangsabschnitten 7 ebenfalls einen parallelen Verlauf zueinander auf. Die Kettenbögen 5 weisen jeweils zwischen den Übergangsabschnitten 7 einen gleichbleibenden Querschnittsverlauf auf.

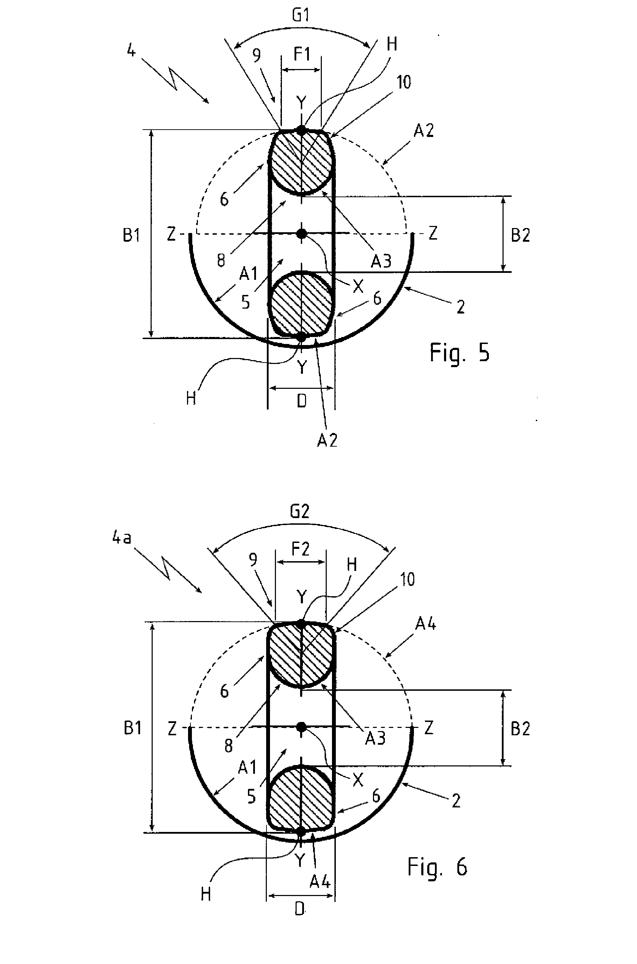

Figur 5 zeigt einen Schnitt durch die Kettenschenkel 6 des Kettenglieds 4. Mit Bezug auf die Darstellung ist im unteren Bereich des Kettenglieds 4 der Kanal 2, näherhin dessen innere Wandung mit dem Innenradius A1 hälftig angedeutet. Gut zu erkennen ist, dass die in Richtung der Querachse Y verlaufende Länge B1 des Kettenglieds 4 sich zwischen den Scheiteln H der beiden Außenradien A2 erstreckt.

Die jeweilige Außenseite 9 der Kettenschenkel 6 ist durch einen Außenradius A2 gegenüber dem Innenradius A1 des Kanals 2 abgerundet. Der Außenradius A2 weist eine Sehnenlänge F1 auf, welche sich dabei über einen Umfangsbereich G1 der Außenseite 9 der Kettenschenkel 6 erstreckt. Der nicht näher dargestellte Mittelpunkt des Außenradius A2 liegt auf der Querachse Y. Dessen Lage ergibt sich ausgehend vom Scheitel H des Außenradius A2. Der Innenradius A1 des Kanals 2 und der Außenradius A2 der Kettenschenkel 6 weisen ein Verhältnis von 1 : 0,8 bis unter 1 : 1,0 zueinander auf. Durch den gegenüber dem Innenradius A1 kleineren Außenradius A2 der Kettenschenkel 6 steht einer deren Außenseite 9 in einer Linienberührung mit deren inneren Wandung des Kanals 2. In der Darstellung von Figur 5 steht einer der Scheitel H der Außenradien A2 der Kettenschenkel 6 mit dem Innenradius A1 des Kanals 2 in einer Linienberührung.

Die dem jeweiligen Außenradius A2 gegenüberliegende Innenseite 8 der Kettenschenkel 6 ist über einen Innenradius A3 gerundet. Die Dicke D ist bei den Kettenbögen 5 und den Kettenschenkeln 6 sowie deren jeweiligen Übergangsabschnitten 7 identisch. Weiterhin weisen die Kettenschenkei 6 in ihrem Querschnitt einen Übergangsbereich 10 auf, welcher den Außenradius A2 mit dem Innenradius A3 verbindet.

Figur 6 zeigt eine Variante des Kettenglieds 4 in Form eines Kettenglieds 4a. Gegenüber dem Kettenglied 4 der Figur 5 weist dieses eine veränderte Ausgestaltung der Außenseiten 9 der Kettenschenkel 6 auf. Die Veränderung bezieht sich auf einen gegenüber dem Innenradius A1 des Kanals 2 identischen Außenradius A4. Das Verhältnis von Innenradius A1 des Kanals 2 zu Außenradius A4 der Kettenschenkel 6 liegt demnach bei 1 : 1. Dessen größere Sehnenlänge F2 geht mit einem ebenfalls größeren Umfangsbereich G2 des Außenradius A4 der Kettenschenkel 6 einher. Durch den identischen Innenradius A1 des Kanals 2 und Außenradius A4 stellt sich zumindest bei einem der Kettenschenkel 6 eine flächige Berührung zwischen dem Umfangsbereich G2 und der inneren Wandung des Kanals 2 ein. Demnach steht der gesamte Umfangsbereich G2 des Außenradius A4 mit dem Innenradius A1 des Kanals 2 in flächigem Kontakt.

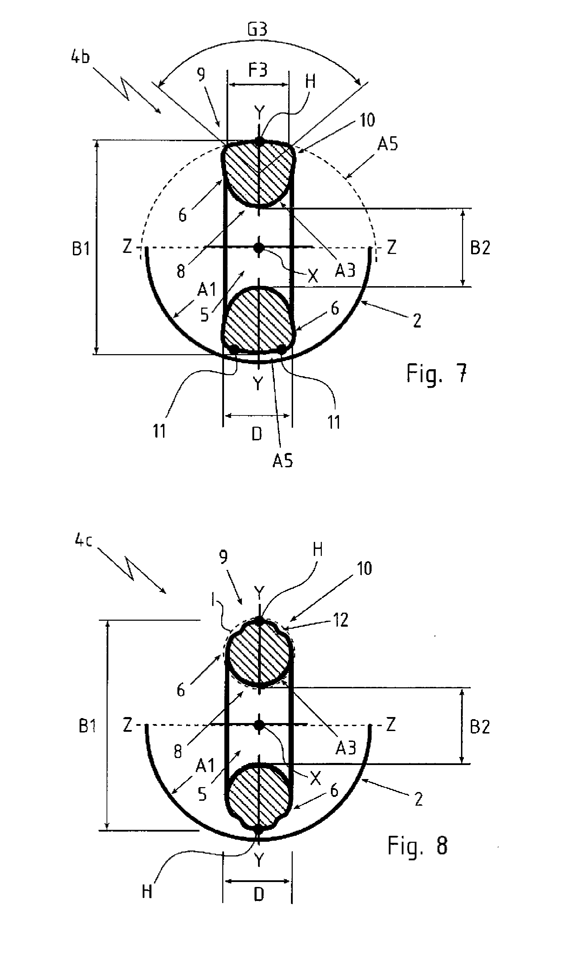

Figur 7 zeigt eine weitere Variante zu den Kettengliedern 4, 4a der Figuren 5 und 6 in Form eines Kettenglieds 4b. Gegenüber den in Figur 5 und 6 dargestellten Sehnenlängen F1, F2 des Außenradius A2, A4 der Kettenschenkel 6 weist dieses eine größere Sehnenlänge F3 auf, welche über die Dicke D der Kettenschenkel 6 des Kettenglieds 4b hinaus geht. Darüber hinaus weist das Kettenglied 4b einen gegenüber den Umfangsbereichen G1, G2 der Figuren 5 und 6 einen größeren Umfangsbereich G3 auf. Hierdurch überlappt auch der Übergangsbereich 10 die Dicke D. Gegenüber den Außenradien A2, A4 der Kettenschenkel 4, 4a aus den Figuren 5 und 6 weist das Kettenglied 4b auch einen größeren Außenradius A5 auf. Der Innenradius A1 des Kanals 2 und der Außenradius A5 der Kettenschenkel 6 weisen ein Verhältnis zwischen 1 : 1,0 und einschließlich 1 : 1,2 zueinander auf. Da der Außenradius A5 der Kettenschenkel 6 den Innenradius A1 des Kanals 2 übersteigt, weist der Umfangsbereich G3 eine zwei-Linien-Berührung mit der inneren Wandung des Kanals 2 auf. Der Umfangsbereich G3 steht mit dem Außenradius A5 mindestens eines Kettenschenkels 6 über zwei Linien 11 mit dem Innenradius A1 des Kanals 2 in Kontakt.

Figur 8 zeigt im Detail den hierbei ausgeprägten Übergangsbereich 10 eines Kettengliedes 4c, welcher S-förmig, insbesondere doppel S-förmig gerundet ist. Durch diese Variante der Ausgestaltung des Übergangsbereichs 10 wird eine Sicke 12 ausgebildet, welche als in den Querschnitt des Kettenschenkels 6 reichende Vertiefung zu verstehen ist, wobei der Innenradius A3 der Kettenschenkel 6 einen Hüllkreis I beschreibt und die Sicke 12 innerhalb dieses Hüllkreises I liegt.

Die Sicke 12 ist dafür vorgesehen, die Kettenschenkel 6 möglichst sicher vor tiefgehender Rissbildung zu schützen. Dies vor dem Hintergrund, dass die durch die Berührung von Kettenglied 4c und Kanal 2 entstehende Reibung neben entsprechenden Reibverlusten zu einer schnellen lokalen Aufheizung der Randschicht des Kettengliedes 4c über die Austenitisierungstemperatur des Werkstoffs hinausführt. Dieser folgt bei Stillstand oder Freilauf eine ebenso schnelle Abkühlung, durch die sich Reibmartensit bilden kann. So tritt neben dem Reibverschleiß der Hobelkette 3 eine zusätzliche, die Belastbarkeit der einzelnen Kettenglieder 4c schwächende Rissbildung auf. Die Risse führen zu Spannungsspitzen und zu einem vorzeitigen Versagen und damit zu einem teuren Produktionsstop der gesamten Hobelvorrichtung 1.

Durch die Ausgestaltung des Übergangsbereichs 10 und die sich damit ausbildenden Sicken 12 werden die sich in der Martensitschicht ausbildenden Risse unterbrochen, wodurch ein Austausch der Hobelkette 3 hinausgezögert und einem Versagen einzelner Kettenglieder 4c vorgebeugt wird.

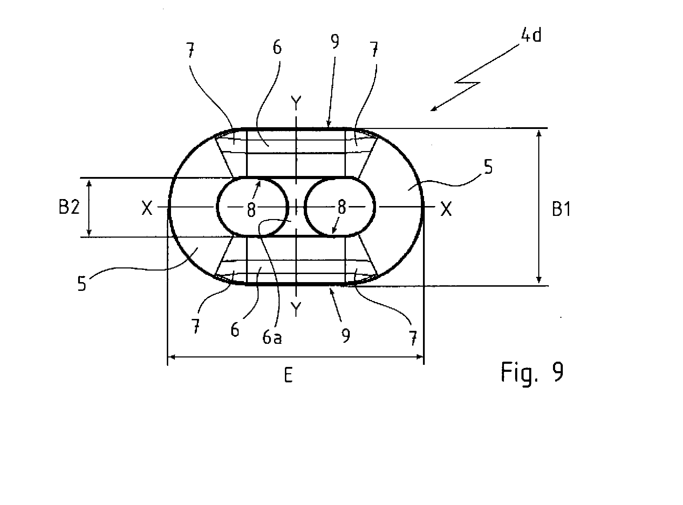

Figur 9 zeigt eine Variante des bereits in Figur 4 dargestellten Kettengliedes 4. In Form eines Kettengliedes 4d weist dieses einen die Kettenschenkel 6 verbindenden Steg 6a auf, welcher einstückig mit dem Kettenglied 4d ausgebildet ist. Durch den Steg 6a ist die Teilung des Kettenglieds 4d mittig unterbrochen. Der Steg 6a ist so ausgeformt, dass er der Form der Kettenbögen 5 von der Innenseite 8 aus spiegelbildlich entspricht.

In der Praxis wird die erfindungsgemäße Hobelvorrichtung 1 bezüglich ihrer einzelnen Komponenten zunächst an den entsprechenden Anforderungen ausgerichtet. Insbesondere die jeweilige Querschnittsform der Kettenschenkel 6 wird hierbei in Kombination mit dem Innenradius A1 des Kanals angepasst. Je nach Ausgestaltung werden sowohl der Außenradius A2, A4, A5 als auch seine jeweilige Sehnenlänge F1 bis F3 sowie der Umfangsbereich G1 bis G3 so eingestellt, dass ein möglichst geringer Verschleiß der Kettenglieder 4, 4a, 4b innerhalb des Kanals 2 der Hobelvorrichtung 1 erreicht wird. Je nach Ausgestaltung kann hierbei der Außenradius A5 der Kettenschenkel 6 den Innenradius A1 des Kanals 2 übersteigen, so dass eine 2-Linien-Berührung erfolgt.

### Bezugszeichen:

1 - Hobelvorrichtung
2 - Kanal v. 1
3 - Hobelkette v. 1
4 - Kettenglied v. 3
4a - Kettenglied v. 3
4b - Kettenglied v. 3
4c - Kettenglied v. 3
4d - Kettenglied v. 3
5 - Kettenbogen v. 4, 4a - d
6 - Kettenschenkel v. 4, 4a - d
6a - Steg v. 4d
7 - Übergangsabschnitt zw. 5 u. 6
8 - Innenseite v. 6
9 - Außenseite v. 6
10 - Übergangsbereich zw. A2 und A3; A3 u. A4; A3 u. A5
11 - Linien zw.A1 u. A5
12 - Sicke v. 6

A1 - Innenradius v. 2
A2 - Außenradius v. 6
A3 - Innenradius v. 6
A4 - Außenradius v. 6
A5 - Außenradius v. 6
B1 - Breite, außen v. 4, 4a - d
B2 - Breite, innen v. 4, 4a - d
C - Winkel zw. 4, 4a - d
D - Dicke v. 4, 4a - d
E - Länge, außen v. 4, 4a - d
F1 - Sehnenlänge v. A2
F2 - Sehnenlänge v. A4
F3 - Sehnenlänge v. A5
G1 - Umfangsbereich v. F1
G2 - Umfangsbereich v. F2
G3 - Umfangsbereich v. F3
H - Scheitel v. A2, A4, A5
I - Hüllkreis v. A3
X - Längsachse
Y - Querachse
Z - Hochachse

## Patentansprüche

1. Hobelvorrichtung mit einer innerhalb eines Kanals (2) mit einem Innenradius (A1) geführten Hobelkette (3), deren Kettenglieder (4, 4a - d) jeweils Kettenbögen (5) und diese verbindende Kettenschenkel (6) aufweisen, wobei die Kettenschenkel (6) im Querschnitt jeweils einen sich über eine Sehnenlänge (F1 bis F3) erstreckenden Außenradius (A2, A4, A5) aufweisen, **dadurch gekennzeichnet**, dass der Innenradius (A1) des Kanals (2) und der Außenradius (A2, A4, A5) der Kettenschenkel (6) ein Verhältnis von 1 : 0,8 bis 1 : 1,2 zueinander aufweisen.

2. Hobelvorrichtung nach Anspruch 1, **dadurch gekennzeichnet,** dass der Innenradius (A1) des Kanals (2) und der Außenradius (A4, A5) der Kettenschenkel (6) ein Verhältnis von 1 : 1,0 bis 1 : 1,2 zueinander aufweisen.

3. Hobelvorrichtung nach Anspruch 1 oder 2, **dadurch gekennzeichnet,** dass eine Dicke (D) der Kettenschenkel (6) und die Sehnenlänge (F1 bis F3) ein Verhältnis von 1 : 0,5 bis 1 : 1,15 zueinander aufweisen.

4. Hobelvorrichtung nach einem der Ansprüche 1 bis 3, **dadurch gekennzeichnet,** dass die Dicke (D) der Kettenschenkel (6) und die Sehnenlänge (F1 bis F3) ein Verhältnis von 1 : 1,0 bis 1 : 1,15 zueinander aufweisen.

5. Hobelvorrichtung nach einem der Ansprüche 1 bis 4, **dadurch gekennzeichnet,** dass sich der Außenradius (A2, A4, A5) über einen Umfangsbereich (G1 bis G3) zwischen 50° bis 100° erstreckt.

6. Hobelvorrichtung nach einem der Ansprüche 1 bis 5, **dadurch gekennzeichnet,** dass sich innerhalb der einzelnen Kettenglieder (4, 4a - 4d) gegenüberliegende Innenseiten (8) der Kettenschenkel (6) einen parallelen Verlauf zueinander aufweisen.

7. Hobelvorrichtung nach Anspruch 6, **dadurch gekennzeichnet,** dass den Innenseiten (8) der Kettenschenkel (6) gegenüberliegende Außenseiten (9) einen parallelen Verlauf zueinander aufweisen.

8. Hobelvorrichtung nach einem der Ansprüche 1 bis 6, **dadurch gekennzeichnet,** dass die sich jeweils zwischen den Kettenbögen (5) erstreckenden Kettenschenkel (6) der einzelnen Kettenglieder (4, 4a - d) eine gleichbleibende Querschnittsform aufweisen.

9. Hobelvorrichtung nach einem der Ansprüche 1 bis 7, **dadurch gekennzeichnet,** dass die Kettenbögen (5) jeweils einen gleichbleibenden Kreisquerschnitt mit zu den Kettenschenkeln (6) hin angeordneten Übergangsabschnitten (7) aufweisen.

10. Hobelvorrichtung nach einem der Ansprüche 1 bis 9, **dadurch gekennzeichnet,** dass zwischen dem Außenradius (A2, A4, A5) und einem Innenradius (A3) eines Kettenschenkels (6) ein Übergangsbereich (10) angeordnet ist.

11. Hobelvorrichtung nach Anspruch 10, **dadurch gekennzeichnet**, dass der Übergangsbereich (10) im Querschnitt der Kettenschenkel (6) einen geraden oder S-förmig gebogenen Verlauf aufweist.

12. Hobelvorrichtung nach einem der Ansprüche 1 bis 11, **dadurch gekennzeichnet,** dass eine sich jeweils in Querrichtung der Kettenglieder (4, 4a - d) erstreckende äußere Breite (B1) der Kettenglieder (4, 4a - d) und der Innenradius (A1) des Kanals (2) ein Verhältnis zwischen 1 : 0,5 und 1 : 0,6 zueinander aufweisen.

13. Hobelvorrichtung nach einem der Ansprüche 1 bis 12, **dadurch gekennzeichnet,** dass der Kanal (2) einen Kreisquerschnitt besitzt.

14. Hobelvorrichtung nach einem der Ansprüche 1 bis 13, **dadurch gekennzeichnet**, dass die Kettenschenkel (6) der Kettenglieder (4d) jeweils über einen Steg (6a) miteinander verbunden sind.

## Claims

1. Planing device, having a planning chain (3) guided within a channel (2) with an inner radius (A1), the chain links (4, 4a - d) of which each comprise chain arcs (5) and chain limbs (6) that connect them, the chain limbs (6) in cross-section each having an outer radius (A2, A4, A5) extending over a chord length (F1 to F3), **characterised in that** the inner radius (A1) of the channel (2) and the outer radius (A2, A4, A5) of the chain limbs (6) are in a ratio of 1:0.8 to 1:1.2 to one another.

2. Planing device according to claim 1, **characterised in that** the inner radius (A1) of the channel (2) and the outer radius (A4, A5) of the chain limbs (6) are in a ratio of 1:1.0 to 1:1.2 to one another.

3. Planing device according to claim 1 or 2, **characterised in that** a thickness (D) of the chain limbs (6) and the chord length (F1 to F3) are in a ratio of 1:0.5 to 1:1.15 to one another.

4. Planing device according to one of claims 1 to 3, **characterised in that** the thickness (D) of the chain limbs (6) and the chord length (F1 to F3) are in a ratio of 1:1.0 to 1:1.15 to one another.

5. Planing device according to one of claims 1 to 4, **characterised in that** the outer radius (A2, A4, A5) extends over a peripheral region (G1 to G3) of between 50° to 100°.

6. Planing device according to one of claims 1 to 5, **characterised in that** opposing inner sides (8) of the chain limbs (6) within the individual chain links (4, 4a - 4d) extend in parallel relationship to one another.

7. Planing device according to claim 6, **characterised in that** outer sides (9) located opposite the inner sides (8) of the chain limbs (6) extend in parallel relationship to one another.

8. Planing device according to one of claims 1 to 6, **characterised in that** the chain limbs (6) extending between the chain arcs (5) of the individual chain links (4, 4a - 4d)each have a constant cross-sectional shape.

9. Planing device according to one of claims 1 to 7, **characterised in that** the chain arcs(5) each have a constant circular cross-section with transition zones(7) arranged towards the chain limbs (6).

10. Planing device according to one of claims 1 to 9, **characterised in that** a transition region (10) is arranged between the outer radius (A2, A4, A5) and an inner radius (A3) of a chain limb (6).

11. Planing device according to claim 10, **characterised in that** the transition region (10) in the cross-section of the chain limbs (6) has a straight or S-shaped curved profile.

12. Planing device according to one of claims 1 to 11, **characterised in that** an outer width (B1) of the chain links (4, 4a - d) extending in the transverse direction of the chain links (4, 4a - d) in each case, and the inner radius (A1) of the channel (2), are in a ratio of between 1:0.5 and 1:0.6 to one another.

13. Planing device according to one of claims 1 to 12, **characterised in that** the channel (2) has a circular cross section.

14. Planing device according to one of claims 1 to 13, **characterised in that** the chain limbs (6) of the chain links (4d) are connected to one another via a bar (6a).

## Revendications

1. Dispositif raboteur comprenant une chaîne de rabot (3) guidée à l'intérieur d'un canal (2) présentant un rayon intérieur (A1), dont les maillons de chaîne (4, 4a - 4d) présentent respectivement des parties courbes de chaîne (5) et des branches de chaîne (6) reliant ces dernières, où les branches de chaîne (6) présentent, dans la section transversale, respectivement un rayon extérieur (A2, A4, A5) s'étendant sur une longueur de corde (F1 à F3), **caractérisé en ce que** le rayon intérieur (A1) du canal (2) et le rayon extérieur (A2, A4, A5) des branches de chaîne (6) présentent l'un par rapport à l'autre un rapport allant de 1:0,8 à 1:1,2.

2. Dispositif raboteur selon la revendication 1, **caractérisé en ce que** le rayon intérieur (A1) du canal (2) et le rayon extérieur (A4, A5) des branches de chaîne (6) présentent l'un par rapport à l'autre un rapport allant de 1: 1,0 à 1:1,2.

3. Dispositif raboteur selon la revendication 1 ou 2, **caractérisé en ce qu'**une épaisseur (D) des branches de chaîne (6) et la longueur de corde (F1 à F3) présentent l'une par rapport à l'autre un rapport allant de 1:0,5 à 1:1,15.

4. Dispositif raboteur selon l'une quelconque des revendications 1 à 3, **caractérisé en ce que** l'épaisseur (D) des branches de chaîne (6) et la longueur de corde (F1 à F3) présentent l'une par rapport à l'autre un rapport allant de 1:1,0 à 1:1,15.

5. Dispositif raboteur selon l'une quelconque des revendications 1 à 4, **caractérisé en ce que** le rayon extérieur (A2, A4, A5) s'étend sur un périmètre (G1 à G3) compris entre 50° et 100°.

6. Dispositif raboteur selon l'une quelconque des revendications 1 à 5, **caractérisé en ce que** des côtés intérieurs (8), se faisant face à l'intérieur des divers maillons de chaîne (4, 4a - 4d), des branches de chaîne (6) présentent les uns par rapport aux autres une extension parallèle.

7. Dispositif raboteur selon la revendication 6, **caractérisé en ce que** des côtés extérieurs (9), faisant face aux côtés intérieurs (8) des branches de chaîne (6), présentent les uns par rapport aux autres un tracé parallèle.

8. Dispositif raboteur selon l'une quelconque des revendications 1 à 6, **caractérisé en ce que** les branches de chaîne (6), s'étendant respectivement entre les parties courbes de chaîne (5), des divers maillons de chaîne (4, 4a - 4d) présentent une forme de section transversale constante.

9. Dispositif raboteur selon l'une quelconque des revendications 1 à 7, **caractérisé en ce que** les parties courbes de chaîne (5) présentent respectivement une section transversale circulaire constante pourvue de sections de transition (7) disposées en direction des branches de chaîne (6).

10. Dispositif raboteur selon l'une quelconque des revendications 1 à 9, **caractérisé en ce qu'**une zone de transition (10) est disposée entre le rayon extérieur (A2, A4, A5) et un rayon intérieur (A3) d'une branche de chaîne (6).

11. Dispositif raboteur selon la revendication 10, **caractérisé en ce que** la zone de transition (10) présente, dans la section transversale des branches de chaîne (6), un tracé rectiligne ou incurvé en forme de S.

12. Dispositif raboteur selon l'une quelconque des revendications 1 à 11, **caractérisé en ce qu'**une largeur (B1) extérieure, s'étendant respectivement dans le sens transversal des maillons de chaîne (4, 4a - 4d), des maillons de chaîne (4, 4a - 4d) et le rayon intérieur (A1) du canal (2) présentent l'un par rapport à l'autre un rapport compris entre 1:0,5 et 1:0,6.

13. Dispositif raboteur selon l'une quelconque des revendications 1 à 12, **caractérisé en ce que** le canal (2) comporte une section transversale circulaire.

14. Dispositif raboteur selon l'une quelconque des revendications 1 à 13, **caractérisé en ce que** les branches de chaîne (6) des maillons de chaîne (4d) sont reliées les unes aux autres respectivement par l'intermédiaire d'une entretoise (6a).
